# EUROPÄISCHE PATENTSCHRIFT

(11) **EP 0 870 133 B1**
(45) Veröffentlichungstag und Bekanntmachung des Hinweises auf die Patenterteilung: **23.06.1999**
(21) Anmeldenummer: 96944663.2
(22) Anmeldetag: 27.12.1996
(51) Int. Cl.: F16H 61/08

(54) **GETRIEBESTEUERUNG ZUR REDUZIERUNG DER THERMISCHEN BELASTUNG VON SCHALTELEMENTEN**
TRANSMISSION CONTROL SYSTEM FOR REDUCING THERMAL LOAD ON ENGAGING ELEMENTS
SYSTEME DE COMMANDE DE BOITE DE VITESSES POUR REDUIRE LES CONTRAINTES THERMIQUES S'EXER ANT SUR DES ELEMENTS DE CHANGEMENT DE VITESSE

(30) Priorität: 11.01.1996 DE 19600739
(43) Veröffentlichungstag der Anmeldung: 14.10.1998
(73) Patentinhaber: ZF FRIEDRICHSHAFEN Aktiengesellschaft, 88038 Friedrichshafen (DE)
(72) Erfinder: DOMIAN, Hans-Jörg, D-88090 Immenstaad (DE); DREIBHOLZ, Ralf, D-88074 Meckenbeuren (DE)
(86) Internationale Anmeldenummer: EP9605848
(87) Internationale Veröffentlichungsnummer: WO9725556

(56) Entgegenhaltungen:
- EP-A- 0 289 466
- EP-A- 0 688 974
- DE-A- 3 546 454
- DE-A- 3 812 327
- PATENT ABSTRACTS OF JAPAN vol. 016, no. 002 (M-1197), 7.Januar 1992 & JP 03 229057 A (TOYOTA MOTOR CORP), 11.Oktober 1991,

## Beschreibung

Die Erfindung betrifft eine Getriebesteuerung zur Reduzierung der thermischen Belastung von Schaltelementen in einem Getriebe während des Anfahrens. Eine Steuerung gemäß den Maßnahmen nach dem Oberbegriff von Anspruch 1 ist aus der EP-A-688 974 bekannt.

Bei den aus der Praxis bekannten Getrieben, welche in der Lage sind, das Anfahren ohne ein spezielles Anfahreiement, wie z. B. eine Strömungskupplung, einen Wandler oder eine separate Anfahrkupplung, zu ermöglichen, sind die während des Anfahrvorganges schlupfenden Schaltelemente hohen thermischen Belastungen ausgesetzt. Insbesondere wenn das Anfahren nur über ein einziges Schaltelement bzw, eine einzige Kupplung bewerkstelligt wird, muß diese Kupplung die komplette Verlustleistung bzw. Reibenergie aufnehmen. Diese hohe Belastung erfordert eine entsprechend robuste Auslegung der Kupplung, was nachteilhafterweise einen erhöhten Bauraumbedarf, ein höheres Gewicht der Schaltelemente sowie höhere Fertigungskosten nach sich zieht.

Aus der DE 38 12 327 ist ein Verfahren zum Einstellen eines Doppelkupplungsgetriebes sowie ein Doppelkupplungsgetriebe eines Kraftfahrzeuges bekannt. Dieses Doppelkupplungsgetriebe weist eine Eingangswelle und eine Ausgangswelle auf, die über stirnradverzahnte und selektiv in Eingriff bringbare Zahnradpaare miteinander verbindbar sind. Es sind eine erste Kupplung und eine zweite Kupplung vorgesehen, deren erste Kupplungshälften drehstarr mit der Eingangswelle und deren zweite Kupplungshälften mit einer Welle bzw. einer die Welle umgebenden Hohlwelle verbunden sind. Schaltmittel dienen zum Betätigen der Kupplungen, um den Kraftfluß zwischen Eingangs- und Ausgangswelle in einem Gang über die Kupplung, die Welle, Schaltmuffen und einen ersten Satz Zahnradpaare bzw. einen benachbarten Gang über die zweite Kupplung, die Hohlwelle, Schaltmuffen und einen zweiten Satz Zahnradpaare zu führen. Beim Anfahren des Kraftfahrzeuges werden die zugehörige eine Kupplung und eine zugehörige Schaltmuffe des einen Ganges und gleichzeitig die andere Kupplung und eine Schaltmuffe eines weiteren der anderen Kupplung zugeordneten Ganges betätigt. Dann, wenn die Ausgangsdrehzahl der Kupplung eines der Gänge deren Eingangsdrehzahl erreicht, wird der Kraftfluß in diesem Gang aufgetrennt.

Dieses bekannte Verfahren bzw. dieses Doppelkupplungsgetriebe stellt eine Möglichkeit zur Reduzierung der thermischen Belastung, d. h. der Reibleistung bzw. Reibarbeit, der Anfahrkupplung bzw. Anfahrkupplungen für ein Doppelkupplungsgetriebe, bei dem beide Eingangskupplungen zum Anfahren eingesetzt werden, dar. Zwar bietet dieses vorgeschlagene Verfahren den Vorteil, daß die beim Anfahren in den Reibbelägen erzeugte beträchtliche Energie, welche in den Kupplungen in Wärme umgesetzt wird, nicht nur von einem Schaltelement aufgenommen werden muß, sondern auf zwei Schaltelemente verteilt wird. Die Verteilung erfolgt jedoch gleichmäßig und unabhängig von dem jeweiligen Betriebszustand der Kupplung, so daß es zu einer Überhitzung und thermischen Überbeanspruchung einer Kupplung, die beispielsweise bereits größere Verschleißerscheinungen als die andere Kupplung aufweist, kommen kann.

Zudem ist dieses Verfahren nachteilhafterweise nur auf Doppelkupplungsgetriebe anwendbar, deren Eingangswelle und Ausgangswelle über stirnradverzahnte und in selektiven Eingriff bringbare Zahnradpaare miteinander verbunden sind.

Weiterhin nachteilhaft ist, daß dieses Verfahren vor allem für Getriebe mit serieller Anordnung der Schaltelemente nicht oder nur bedingt geeignet ist.

Ein weiterer erheblicher Nachteil besteht bei diesem bekannten Verfahren darin, daß vor Abschluß des Anfahrvorganges eine Kupplung abgeschaltet werden muß, welche für das anschließende Weiterfahren nicht geschlossen sein darf. Durch das Öffnen des Schaltelementes bzw. der Kupplung oder durch Betätigung der Schaltmuffe wird der Kraftschluß zur Gangübersetzung nach dem Anfahren somit unerwünschterweise unterbrochen.

Der Erfindung liegt daher die Aufgabe zugrunde, eine Getriebesteuerung der eingangs genannten Art dahingehend weiterzubilden, daß bei einer beliebigen Getriebebauart eine thermische Überbeanspruchung der beim Anfahren beteiligten Schaltelemente verhindert wird und gleichzeitig ein zur gewünschten Übersetzung erforderlicher Kraftfluß aufrechterhalten wird.

Diese Aufgabe wird durch die in Anspruch 1 genannten Merkmale gelöst.

Die erfindungsgemäße Getriebesteuerung ermöglicht es vorteilhafterweise, die thermische Belastung einem individuellen Zustand der am Anfahrvorgang beteiligten Schaltelemente anzupassen, wodurch diese kleiner dimensioniert werden können und trotzdem nicht durch zu große Reibbelastung überhitzt werden.

Daraus ergibt sich der Vorteil, daß der Bauraumbedarf, die Kosten und das Gewicht dieser Schaltelemente deutlich reduziert werden können.

Zudem kann durch die Reduzierung und Anpassung der thermischen Belastung an den jeweiligen Schaltelementen mit Hilfe der erfindungsgemäßen Getriebesteuerung deren Lebensdauer deutlich erhöht werden.

Die erfindungsgemäße Getriebesteuerung bietet des weiteren den Vorteil, daß sie, unabhängig von der Art und der Bauweise des Getriebes, z. B. in einem Planetengetriebe, Vorgelegegetriebe oder einem anderen Getriebe immer dann anwendbar ist, wenn zur Erzeugung und Aufrechterhaltung der Gangübersetzung, mit der angefahren werden soll, mehrere Schaltelemente aktiviert sein müssen.

Diese universell einsetzbare Getriebesteuerung bietet sich auch für stufenlose Getriebe an, sofern mehrere Schaltelemente zur Erzeugung der gewünschten Anfahrübersetzung erforderlich sind.

Da die am Anfahrvorgang beteiligten Schaltelemente nach Abschluß des Anfahrvorganges geschlossen bleiben, kann vorteilhafterweise der für die gewünschte Getriebeübersetzung erforderliche Leistungsfluß erzeugt und aufrechterhalten werden.

Die Getriebesteuerung gemäß der Erfindung ist vorteilhafterweise auch bei jeder beliebigen Anordnung der Schaltelemente anwendbar. So können beispielsweise die betreffenden Schaltelemente parallel oder seriell zueinander angeordnet sein, wobei die Reduzierung der Reibleistung bei paralleler Anordnung der Schaltelemente durch Aufteilung des zu übertragenden Drehmomentes erfolgt und bei serieller Anordnung die Reibleistungsreduzierung durch Aufteilung der zwischen Getriebeeingang und Getriebeausgang bestehenden Drehzahldifferenz auf mehrere Schaltelemente erzielt wird.

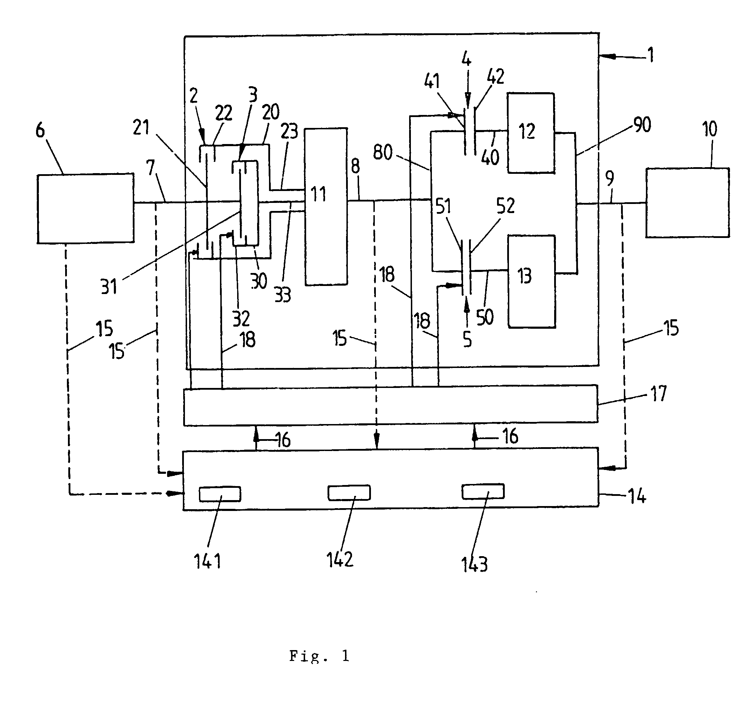

Weitere Vorteile und vorteilhafte Weiterbildungen der Erfindung ergeben sich aus den Unteransprüchen und aus dem nachfolgend unter Hinweis auf die beigefügte Zeichnung näher beschriebenen Ausführungsbeispiel.

Die Zeichnung zeigt eine Prinzipdarstellung eines fiktiven Getriebes mit einer äußerst schematisiert dargestellten Getriebesteuerung zur Erläuterung der erfindungsgemäßen Getriebesteuerung.

Bezug nehmend auf die Zeichnung ist mit 1 ein Getriebe angedeutet, welches drei Teilgetriebe 11, 12, 13 und vier Schaltelemente 2, 3, 4, 5, die jeweils einem Gang zugeordnet sind, aufweist. Diese Schaltelemente sind als einstellbare Reibkupplungen ausgebildet, sie können jedoch alternativ in einer anderen Ausführungsform auch als Bremsen ausgebildet sein. Die Teilgetriebe 11, 12, 13 stellen eigenständige Getriebe dar und sind als Teile des Getriebes 1 zu betrachten.

In dem dargestellten Ausführungsbeispiel ist mit 6 äußerst schematisiert ein Motor angedeutet, welcher eine Eingangswelle 7 des Getriebes 1 antreibt, wobei die Eingangswelle 7 mit einer ersten Kupplungshälfte 21 der Kupplung 2 verbunden ist. Von der ersten Kupplungshälfte 21 kann entsprechend der Drehzahl n7 der Eingangswelle 7 Kraft auf eine zweite Kupplungshälfte 22 der Kupplung 2 übertragen werden, von wo aus der Kraftfluß über ein Umlaufteil 20 zum Teilgetriebe 11 weitergeleitet wird.

Alternativ hierzu ist es auch möglich, den Kraftfluß über die Eingangswelle 7 und einer ersten Kupplungshälfte 31 der Kupplung 3 sowie deren zweite Kupplungshälfte 32, ein damit verbundenes Umlaufteil 30 sowie eine daran befestigte Welle 33 zu dem Teilgetriebe 11 zu führen.

Das Teilgetriebe 11 ist in dem dargestellten Ausführungsbeispiel als Planetengetriebe mit drei Anschlüssen für eine Hohlwelle 23, eine Welle 33 und eine abtriebsseitig weiterführende Welle 8 mit der Drehzahl n8 bzw. der Winkelgeschwindigkeit ω8 ausgebildet.

Selbstverständlich sind anstelle des Planetengetriebes 11 auch Teilgetriebe von einer anderen Getriebebauart, wie z. B. ein Stirnradgetriebe, einsetzbar, welche eine Übersetzungsänderung bewirken.

Über ein Umlaufteil 80 ist die Welle 8 mit einer ersten Kupplungshälfte 41 der Kupplung 4 und einer ersten Kupplungshälfte 51 der Kupplung 5 verbunden. Je nachdem, ob die Kupplung 4 bzw. die Kupplung 5 geschlossen oder geöffnet ist, kann ein von der Winkelgeschwindigkeit ω8 der Welle 8 abhängiger Kraft- bzw. Leistungsfluß über eine mit der zweiten Kupplungshälfte 42 der Kupplung 4 verbundene Welle 40 mit der Drehzahl n40 zu dem Teilgetriebe 12 bzw. von der zweiten Kupplungshälfte 52 der Kupplung 5 und eine damit verbundene Welle 50 mit der Drehzahl n50 zu dem Teilgetriebe 13 geführt werden. Von dem Teilgetriebe 12 bzw. 13, wo ein Übersetzungsvorgang stattfindet, wird die Kraft bzw. Leistung über ein Umlaufteil 90 auf eine Ausgangswelle 9 übertragen, welche zu einem mit 10 bezeichneten, schematisch dargestellten Abtrieb führt.

Im folgenden wird ein Kraft- bzw. Leistungsfluß von dem Motor 6 über die Kupplung 2 zu dem Teilgetriebe 11, von dem Teilgetriebe 11 über die Kupplung 5 zu dem Teilgetriebe 13 und von dort zum Abtrieb 10 betrachtet, wobei die bei einem Anfahrvorgang entstehende Reibleistung an den beteiligten Kupplungen 2 und 5 zwischen diesen derart aufgeteilt wird, daß eine thermische Überbeanspruchung der Kupplungen 2 und 5 vermieden wird.

Wenn mit diesem Leistungsfluß bzw. in diesem Gang angefahren wird, so wird die gesamte während des Anfahrvorganges auftretende Reibleistung bzw. Verlustleistung auf die Schaltelemente 2 und 5, welche in dem vorliegenden Ausführungsbeispiel in Reihe zueinander, d. h. seriell, angeordnet sind, so aufgeteilt, daß die prozentuale Aufteilung der Gesamtreibleistung P_Rges an die schaltelementspezifische thermische Belastbarkeit angepaßt ist.

Während des Anfahrvorganges liefert der Motor 6 das Drehmoment T_mot. Die Kupplung 2 überträgt während der Anfahrphase das Drehmoment T2 = T_mot. Solange sich die Kupplung 2 in einer Rutschphase befindet, liegt an dieser Kupplung die Differenzwinkelgeschwindigkeit Δω2 vor. Die Reibleistung beträgt somit an der Kupplung 2 P_2 = T_2 x Δω2. Läßt man gleichzeitig zu der Kupplung 2 auch die Kupplung 5 rutschen, so herrscht an der Kupplung 5 die Differenzwinkelgeschwindigkeit Δω5. Von der Kupplung 5 wird ein Drehmoment T_5 übertragen, wobei das Drehmoment T_5 dem Produkt aus dem Drehmoment T_2 und einer Übersetzung i_11 des Teilgetriebes 11 entspricht. Die an der Kupplung 5 vorliegende Reibleistung P_5 entspricht in diesem Fall dem Produkt des Drehmomentes T_5 und der Differenzwinkelgeschwindigkeit Δω5. Die Summe der beiden an den Kupplungen 2 und 5 erzeugten Reibleistungen P_2 und P_5 entspricht der Gesamtreibleistung P_Rges, welche auch mit P_Rges = T_6 x (ω6 - i x ω10) angegeben werden kann, worin i = i_11 x i_13 ist mit i_11 für die Übersetzung des Teilgetriebes 11, i_13 für die Übersetzung des Teilgetriebes 13 und ω10 für die Winkelgeschwindigkeit des Abtriebes 10.

Die Differenzwinkelgeschwindigkeiten Δω2 und Δω5 sind zu jedem Zeitpunkt durch Messung oder Berechnung bekannt. Hierzu ist in dem Getriebe 1 eine nicht näher dargestellte Sensorik vorgesehen, welche Betriebszustandsdaten, wie z. B. Drehzahl und Temperatur an den Wellen 7, 8, 9, 23, 33, 40, 50 sowie an den Schaltelementen 2, 3, 4, 5, am Motor 6 und am Abtrieb 10 erfaßt, und diese an eine Regel- und Steuereinheit 14 weiterleitet, was in der Zeichnung durch einige beispielhafte Pfeile 15 dargestellt ist.

Die Differenzwinkelgeschwindigkeiten Δω2 und Δω5 sind über Kupplungsmomente bzw. Reibmomente an den Kupplungen 2 und 5 direkt beeinflußbar, indem die Kupplungen 2 und 5 mit unterschiedlich starkem Druck ansteuerbar bzw. betätigbar sind. Erhöht man beispielsweise den Druck an der Kupplung 2, so wird die Differenzwinkelgeschwindigkeit Δω2 entsprechend der Höhe des aufgebrachten Druckes verringert. Gleiches gilt auch für die Kupplung 5. Somit kann, je nach dem von der Sensorik erfaßten Betriebszustand, an den bei dem Anfahrvorgang beteiligten Bauteilen von der Regel- und Steuereinheit 14, welche Befehle (mit Pfeilen 16 angedeutet) an eine geeignete Aktuatorik 17 gibt, über die Aktuatorik 17 der Druck an den Kupplungen 2 und 5 entsprechend der thermischen Belastung und Belastbarkeit der Kupplungen eingestellt werden. Die Ansteuerung der beteiligten Bauteile, insbesondere der Schaltelemente 2, 3, 4, 5 durch die Aktuatorik 17 ist in der Zeichnung durch einige beispielhafte Pfeile 18 angedeutet.

Über den an den Kupplungen 2 und 5 anliegenden Druck und damit auch über die daran auftretenden Kupplungsmomente läßt sich somit die Drehzahl der Zwischenwelle 8 im Verhältnis zur Drehzahl der Eingangswelle 7 bzw. zur Drehzahl der Ausgangswelle 9 einstellen.

Entsprechend der individuellen thermischen Belastbarkeit der Kupplungen 2 und 5 liegen an der Regel- und Steuereinheit 14 Sollwerte für die Differenzwinkelgeschwindigkeit Δω2 und Δω5 vor. Soll der Anteil an der Gesamtreibleistung P_Rges, den die Kupplung 2 übernimmt, reduziert werden und der Anteil der Kupplung 5 entsprechend erhöht werden, so muß hierzu der Betrag der Differenzwinkelgeschwindigkeit Δω2 reduziert und der Betrag der Differenzwinkelgeschwindigkeit Δω5 erhöht werden. Dies wird dadurch erreicht, daß das Drehmoment T_5 an der Kupplung 5 kurzzeitig zurückgenommen wird, indem der an der Kupplung 5 anliegende Druck mittels einem von der Aktuatorik 17 ausgehenden Befehl (durch Pfeil 18 dargestellt) reduziert wird.

Eine zur Druckeinstellung an den Kupplungen 2, 3, 4, 5 erforderliche Hydraulik (nicht dargestellt) wird durch eine Elektronik, die dem allgemeinen Stand der Technik entspricht, gesteuert.

Während der Momentenreduzierung in der Kupplung 5, bei der die Hydraulik mit einem Druckregler (nicht dargestellt) elektronisch derart gesteuert wird, daß der an der Kupplung 5 anliegende Druck reduziert wird, wirkt an der Welle 8 zwischen dem Teilgetriebe 11 und der Kupplung 5 ein Beschleunigungsmoment, wodurch sich der Betrag der Winkelgeschwindigkeit ω8 der Welle 8 erhöht. Das Beschleunigungsmoment an der Welle 8 wird erzeugt, indem sich die Winkelgeschwindigkeit der Welle 8 bei einer Reduzierung des Drehmomentes T_5 erhöht bzw. bei einer Erhöhung des Drehmomentes T_5 reduziert.

Die Winkelgeschwindigkeit ω6 des Motors 6 und die Winkelgeschwindigkeit ω10 des Abtriebs 10 ändert sich während dieses gesamten Zeitabschnittes nicht bzw. nur geringfügig.

Die Differenzwinkelgeschwindigkeit Δω2, welche der Differenz zwischen der Winkelgeschwindigkeit ω23 der Hohlwelle 23 und der Winkelgeschwindigkeit ω7 der Eingangswelle 7 entspricht, nimmt also ab, während die Differenzwinkelgeschwindigkeit Δω5, die der Differenz zwischen der Winkelgeschwindigkeit ω8 der Welle 8 und der Winkelgeschwindigkeit ω50 der Welle 50 entspricht, hingegen zunimmt. Auf diese Weise kommt es an der Kupplung 5 zu einer Erhöhung des Anteils an der Gesamtreibleistung P_Rges um einen Betrag ΔP_R.

Die thermische Belastung an der Kupplung 2 wird demgegenüber um den Betrag ΔP_R reduziert. Die Verteilung der Reibleistung und damit die thermische Belastung der Schaltelemente kann also stufenlos variiert werden.

Die Kupplungen 2, 3, 4, 5 werden, wie bereits beschrieben, über die Aktuatorik 17 von der Regel- und Steuereinheit 14 angesteuert. Die in der Zeichnung äußerst schematisiert dargestellte Aktuatorik 16 ist als elektronisch gesteuerte Hydraulik mit Stellgliedern zur Steuerung des Druckes, der zu den Kupplungen 2, 3, 4, 5 geführt wird, ausgebildet. Die Aktuatorik 17 beinhaltet ebenfalls nicht mehr dargestellte Stellglieder für weitere Schaltelemente, wie beispielsweise Pedale.

Die Regel- und Steuereinheit 14, welche Befehle, die mit Pfeilen 16 angedeutet sind, an die Aktuatorik 17 gibt, erhält über die nicht näher dargestellte Sensorik Informationen über den Zustand des Systems, wie beispielsweise die Drehzahlen der einzelnen Wellen, die an den Schaltelementen vorliegende Temperatur, die Stellung eines Fahrpedales usw. und ermittelt daraus laufend geeignete Werte für die Stellglieder der Aktuatorik 17. Die Regel- und Steuereinheit 14 beinhaltet hierzu einen Sollwertgenerator 141, eine Regeleinrichtung 142 und eine Meßwertverarbeitungseinrichtung 143. Die an der Regel- und Steuereinheit 14 eingehenden Informationen über den Betriebszustand werden mit Sollwerten verglichen, die sich aus einem gesteuerten und einem geregelten Anteil zusammensetzen. Während über den rückwirkungsfreien Steuerungsanteil bekannte Auswirkungen auf den Betrieb, wie sie sich z. B. aus einer Gaspedalstellung ergeben, berücksichtigt werden, werden über den geregelten Anteil die vom Betrieb beeinflußten Parameter berücksichtigt. Die Aufgabe der Regel- und Steuereinheit 14 besteht vor allem darin, eine Aufteilung der Gesamtreibleistung P_Rges zu gewährleisten, die sich an der thermischen Belastbarkeit der betroffenen Schaltelemente orientiert. Somit wird eine Überbeanspruchung der Schaltelemente verhindert.

Die Schaltelemente 2 und 5 (oder 2 und 4 oder 3 und 5 oder 3 und 4) bleiben auch nach dem Anfahrvorgang geschlossen bzw. liegen nach dem Anfahrvorgang im Kraft- bzw. Momentenfluß. Es wird somit nicht nur im Anfahrzustand, sondern auch im geschalteten Zustand mit mehreren Schaltelementen operiert.

Der geschlossene Zustand eines Schaltelements ist hierbei dadurch charakterisiert, daß dieses entweder haftet oder geregelt mit geringer Differenzdrehzahl- bzw. -winkelgeschwindigkeit gleitet.

Selbstverständlich ist der grundsätzliche Gedanke der Erfindung, nämlich die Reduzierung der thermischen Belastung der Schaltelemente entsprechend deren spezifischen werkstoffbedingten Gegebenheiten und Dimensionierung, unabhängig von dem zuvor geschilderten Ausführungsbeispiel. Das in dem Ausführungsbeispiel beschriebene fiktive Getriebe stellt nur eine bevorzugte Ausführung dar, welche vielfältig variierbar ist.

Beispielsweise können die Teilgetriebe 11, 12, 13 in einer anderen Getriebeausführung an einer anderen Stelle, z. B. zwischen der Eingangswelle 7 und einem der Schaltelemente 2, 3 oder zwischen den Schaltelementen 4, 5 und weiteren Schaltelementen bzw. der Ausgangswelle 9, angeordnet sein. Unter einem Schaltelement ist sowohl eine Kupplung als auch eine Bremse zu verstehen.

Des weiteren ist beispielsweise neben der in dem Ausführungsbeispiel beschriebenen seriellen Anordnung der Schaltelemente auch eine parallele Anordnung von Schaltelementen möglich, insbesondere bei Verwendung von Planeten-bzw. Umlaufgetrieben. Die Vorzüge der anhand des Ausführungsbeispieles mit einer seriellen Anordnung der Schaltelemente beschriebenen Getriebesteuerung lassen sich vor allem auch deshalb bevorzugt mit einem Umlaufgetriebe mit Parallelanordnung der Schaltelemente erzielen, da ein Umlaufgetriebe aufgrund seiner physikalischen Gegebenheiten und höheren Freiheitsgrade in beliebiger Form, d. h. auch ohne drehsteife Verbindungen, ausgeführt werden kann, wobei die Parallelanordnung der Schaltelemente im Prinzip einer Serienanordnung in einem Vorgelegegetriebe entspricht.

Als eine weitere Variation bei der Ausführung des Getriebes kann die Aktuatorik 17 anstelle mit einer Hydraulik selbstverständlich auch mit einer Pneumatik oder einer mechanischen oder einer elektrischen Übertragung ausgebildet sein.

Dergleichen Variationen liegen selbstverständlich im Rahmen der Erfindung.

### Bezugszeichen

- 1: Getriebe
- 2: Schaltelement
- 3: Schaltelement
- 4: Schaltelement
- 5: Schaltelement
- 6: Motor
- 7: Eingangswelle
- 8: Welle
- 9: Ausgangswelle
- 10: Abtrieb
- 11: Teilgetriebe
- 12: Teilgetriebe
- 13: Teilgetriebe
- 14: Regel- und Steuereinheit
- 15: Datenleitung
- 16: Befehlsleitung
- 17: Aktuatorik
- 18: Steuerleitung

- 20: Umlaufteil
- 21: erste Kupplungshälfte
- 22: zweite Kupplungshälfte
- 23: Hohlwelle

- 30: Umlaufteil
- 31: erste Kupplungshälfte
- 32: zweite Kupplungshälfte
- 33: Welle

- 40: Welle
- 41: erste Kupplungshälfte
- 42: zweite Kupplungshälfte

- 50: Welle
- 51: erste Kupplungshälfte
- 52: zweite Kupplungshälfte

- 80: Umlaufteil

- 90: Umlaufteil

- 141: Sollwertgenerator
- 142: Regeleinrichtung
- 143: Meßwertverarbeitungseinrichtung

## Patentansprüche

1. Getriebesteuerung, geeignet zur Reduzierung der thermischen Belastung von Schaltelementen (2 bis 5) in einem Getriebe (1) während des Anfahrens, wobei das Getriebe eine Eingangswelle (7) und eine Ausgangswelle (9) und wenigstens zwei Schaltelemente bzw. Kupplungen (2 bis 5) aufweist,
- die jeweils einem Gang zugeordnet sind und
- mit jeweils einer ersten Kupplungshälfte, welche die von Richtung der Eingangswelle (7) kommende Kraft auf eine zweite Kupplungshälfte überträgt, welche den Kraftfluß in Richtung der Ausgangswelle (9) weiterleitet,
- wobei die Schaltelemente derart angeordnet sind, daß zwischen der ersten Kupplung (2, 3) und einer weiteren Kupplung (4, 5) ein Teilgetriebe (11, 12, 13) und jeweils Wellen angeordnet sind und
- wobei die Schaltelemente über eine Aktuatoreinrichtung (17) von einer Regel- und Steuereinheit (14), die von einer Sensoreinrichtung Systemzustandsdaten erhält, derart angesteuert werden, daß bei einem Anfahrvorgang wenigstens zwei der Schalteiemente gleichzeitig betätigt werden und eine dabei entstehende Reibleistung der Schaltelemente zwischen diesen aufgeteilt wird,
dadurch **gekennzeichnet**, daß eine an jedem der Schaltelemente (2, 3, 4, 5) vorliegende Differerzwinkelgeschwindigkeit (Δω2, Δω3, Δω4, Δω5) über das jeweils wirksame Kupplungsmoment direkt beeinflußt wird, wobei dieses Kupplungsmoment durch Zu- bzw. Abführung von Druck über die Regel- und Steuereinheit und die Aktuatoreinrichtung (17) welche der Regel- und Steuereinheit nachgeordnet ist, entsprechend der thermischen Belastung und Belastbarkeit des jeweiligen Schaltelements erhöht bzw. reduziert wird.

2. Getriebesteuerung nach Anspruch 1, dadurch **gekennzeichnet**, daß die Regel- und Steuereinheit (14) eine Aufteilung der Gesamtreibleistung (P_Rges) vornimmt, die sich an der thermischen Belastbarkeit der Schaltelemente (2, 3, 4, 5) orientiert.

3. Getriebesteuerung nach den Ansprüchen 1 und 2, dadurch **gekennzeichnet**, daß die Regel- und Steuereinheit (14) einen Sollwertgenerator (141), eine Regeleinrichtung (142) und eine Meßwertverarbeitungseinrichtung (143) aufweist.

## Claims

1. Transmission control, suitable for reducing the thermal load of shift elements (2 to 5) in a transmission (1) during start-up, wherein the transmission comprises an input shaft (7) and an output shaft (9) and at least two shift elements and/or clutches (2 to 5),
- which are associated in each case with a gear and
- comprise in each case a first clutch half, which transfers the power coming from the direction of the input shaft (7) to a second clutch half, which transmits the power flow in the direction of the output shaft (9),
- wherein the shift elements are disposed in such a way that between the first clutch (2, 3) and a further clutch (4, 5) a power divider (11, 12, 13) and in each case shafts are disposed and
- wherein the shift elements are controlled via an actuator device (17) by an automatic electrical control unit (14), which receives system status data from a sensor device, in such a way that during a start-up operation at least two of the shift elements are simultaneously operated and a resulting friction power of the shift elements is divided between the latter,
characterized in that a differential angular velocity (Δω2, Δω3, Δω4, Δω5) at each of the shift elements (2, 3, 4, 5) is directly influenced by the coupling torque effective in each case, wherein said coupling torque is increased or reduced by supply or removal of pressure by means of the automatic electrical control unit and the actuator device (17), which is disposed downstream of the automatic electrical control unit, in accordance with the thermal load and loading capacity of the respective shift element.

2. Transmission control according to claim 1,
characterized in that the automatic electrical control unit (14) effects a division of the total driving power (P_Rges), which is adapted to the thermal loading capacity of the shift elements (2, 3, 4, 5).

3. Transmission control according to claims 1 and 2,
characterized in that the automatic electrical control unit (14) comprises a setpoint generator (141), a controlling system (142) and a measured-value processing device (143).

## Revendications

1. Commande de boîte de vitesses destinée à réduire la charge thermique d'éléments de commande (2 à 5) dans une boîte de vitesses (1) pendant le démarrage, la boîte de vitesses comportant un arbre d'entrée (7) et un arbre de sortie (9) ainsi qu'au moins deux éléments de commande, respectivement embrayages (2 à 5),
- qui sont chacun affecté à une vitesse et
- présentant chacun une première moitié d'embrayage qui transmet la force venant dans la direction de l'arbre d'entrée (7) sur une deuxième moitié d'embrayage qui transfère plus loin le flux de force en direction de l'arbre de sortie (9)
- dans laquelle les éléments de commande sont disposés de telle façon qu'entre le premier embrayage (2, 3) et un autre embrayage (4, 5) sont disposés une transmission partielle (11, 12, 13) et des arbres correspondants et
- dans laquelle les éléments de commande sont mis en oeuvre par l'intermédiaire d'une unité d'actionnement (17) d'une unité de réglage et de commande (14) qui reçoit d'une installation de détecteurs des données de l'état du système de telle manière que lors d'un démarrage, au moins deux des éléments de commande sont actionnés simultanément et un effet de friction engendré de ce fait par des éléments de commande est réparti entre ceux-ci,
**caractérisée** en ce qu'une vitesse d'angle différentielle (Δω2, Δω3, Δω4, Δω5) présente sur chaque élément de commande (2, 3, 4, 5) est influencée directement par l'intermédiaire du couple d'embrayage efficace à ce moment, ce couple d'embrayage étant augmenté, respectivement réduit, par l'amenée, respectivement l'évacuation, de pression par l'intermédiaire de l'unité de réglage et de commande et l'unité d'actionnement (17) montée en aval de l'unité de réglage et de commande en fonction de la charge thermique et de la charge admissible de l'élément de commande concerné.

2. Commande de boîte de vitesses selon la revendication 1, **caractérisée** en ce que l'unité de réglage et de commande (14) effectue une répartition de l'effet de frottement total (P_Rges) qui s'oriente selon la charge thermique admissible des éléments de commande (2, 3, 4, 5).

3. Commande de boîte de vitesses selon les revendications 1 et 2, **caractérisée** en ce que l'unité de réglage et de commande (14) comporte un générateur de valeurs de consigne (141), un dispositif de réglage (142) et un dispositif de traitement des valeurs mesurées (143).
